# EUROPÄISCHE PATENTANMELDUNG

(11) **EP 0 801 296 A1**
(43) Veröffentlichungstag der Anmeldung: **15.10.1997**
(21) Anmeldenummer: 96104689.3
(22) Anmeldetag: 25.03.1996
(51) Int. Cl.: G01N 21/17

(54) **Photoakustischer Gassensor**

(71) Anmelder: CERBERUS AG, CH-8708 Männedorf (CH)
(72) Erfinder: Baraket, Mourad, Dr., 8712 Stäfa (CH); Feltre, Mauro, 8713 Uerikon (CH); Forster, Martin, Dr., 8645 Jona (CH); Lenggenhager, René, Dr., 8810 Horgen (CH); Portmann, Andreas, 8713 Uerikon (CH); Tenchio, Georges, 8123 Ebmatingen (CH)

(57) **Zusammenfassung**

Ein photoakustischer Gassensor (1) mit einer Messzelle (2), einer Lampe (3), einer Photodiode (17), einer gaspermeablen Membran (7) und einem Mikrofon (6) enthält eine explosionssicher betriebene Vorrichtung zur Überwachung der Funktionstüchtigkeit der Membran (7) und des Mikrofons (6), die aktiv eine künstliche, von der Anwesenheit von zu detektierenden Gasen unabhängigen Druckmodulierung in der Messzelle (2) erzeugt, die vom Mikrofon (6) in elekrische Überwachungssignale umgewandelt wird. Die Druckmodulierung erfolgt durch eine Erwärmung der Luft in der Messzelle (2). In einem Verfahren zur Bewertung der Überwachungssignale werden diese in einer Schaltung (11) verarbeitet und ausgewertet, wobei ein Mikroprozessor (21) die Überwachungssignale vorgegebenen Bereichen zuordnet und den Funktionzustand der Membran (7) und des Mikrofons (6) sowie die Mikrofonempfindlichkeit feststellt. Je nach dem Bereich, dem das Überwachungssignal zugeordnet wird, wird entweder eine Meldung für korrekte Funktion des Gassensors (1), eine Störungsmeldung für Defekte am Mikrofon (6) und/oder an der Membran (7) abgegben oder bei einer Veränderung der Mikrofonempfindlichkeit infolge Langzeitdrift eine Kalibrierung durchgeführt, indem Gaskonsentrationswerte neu berechnet und in einem EEPROM 22 abgespeichert werden. Eine bevorzugte Ausführungsform der Überwachungsvorrichtung weist ein elektrisches Heizelement (9) auf bestehend aus einem Draht (12), das durch modulierte Erwärmung der in der Messzelle (2) befindlichen Luft eine künstliche Druckmodulierung erzeugt. Die Dimensionen des Drahtes (12) und Komponenten der Schaltung (11) sind so gewählt, dass die behördlichen Bestimmungen bezüglich Maximalstrom und Höchsttemperatur für eine Explosionssicherheit erfüllt sind.

## Beschreibung

Die Erfindung betrifft einen photoakustischen Gassensor mit einer explosionssicher betriebenen, aktiven Vorrichtung zur Überwachung der Funktionstüchtigkeit seiner Komponenten und Kalibrierung seiner Empfindlichkeit und ein Verfahren zur Bewertung der Ausgangssignale der Vorrichtung.

Photoakustische Gassensoren werden in Forschung und Industrie zur Feststellung der Konzentration von bestimmten vorherrschenden Gasen eingesetzt. Ihre Anwendungsbereiche sind zum Beispiel die Überwachung von Prozessen in Bioreaktoren oder Brauereien und von Gaskonzentrationen in Laboratorien und anderen Arbeitsräumen zwecks Einhaltung der maximalen Arbeitsplatzkonzentrationen (MAK). Sie stellen die Anwesenheit und Konzentration eines Gases fest und geben bei Überschreiten einer vorgegebenen Konzentration ein Alarm- oder Warnsignal ab.

Heute verwendete photoakustische Gassensoren, wie zum Beispiel in der Europäischen Patentanmeldung Nr. 95113854.4 beschrieben, bestehen typischerweise aus einer Messzelle mit einer gaspermeablen Membran, einer gepulst betriebenen Lichtquelle, einer Photodiode, einem Mikrofon und einer elektrischen Schaltung zum Betrieb der Lichtquelle und des Mikrofons und zur Auswertung des Mikrofonausgangssignals. Die Lichtquelle sendet Lichtpulse in die Messzelle, die eine Wellenlänge besitzen, die von dem zu detektierenden Gas absorbiert werden. Hierzu werden entweder schmalbandige Lichtquellen wie Leuchtdioden und Laser oder breitbandige Lichtquellen wie Glühwendel zusammen mit einem optischen Bandpassfilter eingesetzt. Die Photodiode dient dazu, die Intensität der Lichtpulse zu messen, wobei die von ihr resultierenden Signale der Regulierung der Betriebsspannung der Lichtquelle und Einhaltung einer stabilen Lichtintensität dienen. Befindet sich ein zu detektierendes Gas in der Umgebung des Gassensors, dringt es durch die gaspermeable Membran in die Messzelle ein und absorbiert dort das eingestrahlte Licht. Die Absorption der Lichtpulse bewirkt eine Erwärmung und Ausdehnung des Gases in der Messzelle, wodurch eine Druckmodulierung erzeugt wird, die vom Mikrofon empfangen und in ein elektrisches Signal umgewandelt wird. Das Ausgangssignal des Mikrofons wird von einer Auswerteschaltung verstärkt und mit Gaskonzentrationswerten verglichen, die bei einer Eichung des Sensors in einem EEPROM gespeichert worden sind. Aufgrund der gespeicherten Eichwerte wird die Konzentration des detektierten Gases bestimmt und gegebenenfalls ein Warn- oder Alarmsignal abgegeben.

Ist das Ausgangssignal solcher Gassensoren gleich Null, besteht die Unsicherheit, ob dieses Nullsignal einer Abwesenheit des zu detektierenden Gases entspricht oder einem Defekt an einer seiner Komponenten zugrunde liegt, wie zum Beispiel einem Abfall der Mikrofonempfindlichkeit. Der Gassensor der oben erwähnten Anmeldeschrift verfügt über eine passive Überwachung der Funktionstüchtigkeit des Mikrofons und anderer seiner Komponenten mittels eines Untergrundsignals des Mikrofonausgangssignals, das von der Erwärmung von Teilen der Messzelle durch Lichtabsorption herrührt. Ist das Mikrofon defekt oder hat die Membran ein kleines Loch, so wird das Untergrundsignal kleiner. Die Methode erlaubt jedoch nicht, festzustellen, ob das Mikrofon noch über seine volle Empfindlichkeit verfügt oder seine Empfindlichkeit abgefallen ist. Ist nämlich die Empfindlichkeit des Mikrofons gefallen, wie zum Beispiel durch Drift über längere Zeit oder durch einen plötzlich auftretenden Defekt, werden seine Ausgangswerte falschen Gaskonzentrationen zugeordnet und ein Gasalarm wird womöglich nicht gemeldet. Ferner ist das Untergrundsignal in Abhängigkeit der Wellenlänge der Lichtpulse, die in die Messzelle gelangen, verschieden gross und bei bestimmten Wellenlängen sogar nahezu gleich Null, wodurch eine Auswertung des Untergrundsignals erschwert ist. Eine weitere Methode ist die Überwachung des Rauschens des Mikrofons. Verschwindet dieses Rauschen, ist dies ein Hinweis darauf, dass das Mikrofon nicht mehr richtig arbeitet. Andererseits ist ein Vorhandensein eines Rauschens kein eindeutiger Hinweis auf ein intaktes Mikrofon. Ein Mikrofonrauschen wird nämlich dann vorgetäuscht, wenn die Membran ebenfalls defekt ist und ein Rauschen durch äussere Druckschwankungen verursacht wird, welches das stark verkleinerte Rauschen des defekten Mikrofons überlagert. Ein Defekt an der Membran und am Mikrofon kann also falsch interpretiert werden. Schliesslich beruhen diese Überwachungsmethoden mittels Untergrundsignal und Räuschen auf passiven Effekten, die von der Schaltung nicht direkt gesteuert werden.

Von diesem Stand der Technik ausgehend, ist der Erfindung die Aufgabe gestellt, einen photoakustischen Gassensor der obengenannten Art zu schaffen, der eine aktive Vorrichtung zur Überwachung der Funktionstüchtigkeit der gaspermeablen Membran und des Mikrofons aufweist, sowie ein Verfahren zur Bewertung der Ausgangssignale der Überwachungsvorrichtung zur Feststellung des Funktionszustands des Mikrofons und der Membran und zur Kalibrierung der Mikrofonempfindlichkeit. Insbesondere soll der mit dieser Überwachungsvorrichtung ausgestattete Gassensor explosionssicher betrieben werden.

Die Aufgabe wird erfindungsgemäss durch einen photoakustischen Gassensor der obengenannten Art gelöst, der eine explosionssichere Vorrichtung zur Überwachung der Funktionstüchtigkeit des Mikrofons und der Membran und Durchführung einer Kalibrierung der Mikrofonempfindlichkeit enthält, die eine Vorrichtung zur aktiven Erzeugung einer künstlichen Druckmodulierung in der Messzelle, die vom Mikrofon in elektrische Überwachungssignale umgewandelt werden, sowie eine Schaltung zum Betrieb dieser Vorrichtung, zur Verarbeitung und Auswertung der Überwachungssignale und Kalibrierung der Mikrofonempfindlichkeit aufweist. Vorzugsweise besteht diese Vorrichtung aus einem elektrischen Heizelement zur modulierten Erwärmung der Luft, wie zum Beispiel ein Draht, ein Widerstand, eine Heizfolie. Es eignet sich auch das Mikrofongehäuse zu dieser Erwärmung. Durch die modulierte Erwärmung der Luft wird, sofern die Membran keine undichten Stellen aufweist, eine künstliche Druckmodulierung erzeugt, die nicht von der Anwesenheit eines Gases in der Messzelle des Gassensors herrührt. Ist das Mikrofon ebenfalls funktionstüchtig, erzeugt es bei Empfang der Druckmodulierung ein elektrisches Signal, das von der Schaltung verstärkt und ausgewertet wird.

In dem erfindungsgemässen Verfahren wird aufgrund des resultierenden Überwachungssignals auf die Funktionstüchtigkeit der Membran und des Mikrofons geschlossen und gegebenenfalls eine Kalibrierung der Mikrofonempfindlichkeit durchgeführt, wobei die Grösse sowie die zeitliche Veränderung des Überwachungssignals ausgewertet werden. In dem Verfahren wird die Grösse des resultierenden Überwachungssignals einem von mehreren, verschiedenen Bereichen zugeordnet. Fällt die Grösse des Überwachungssignals in einen vorgegebenen positiven Bereich, gibt die Schaltung eine Meldung ab, die darauf hinweist, dass sowohl die Membran als auch das Mikrofon richtig funktionieren. Fällt das Überwachungssignals im Vergleich zum ersten vorgegebenen Bereich in einen höheren oder tieferen Bereich, wird von einem Mikroprozessor eine Kalibrierung der Mikrofonempfindlichkeit durchgeführt, indem aufgrund der festgestellten Mikrofonempfindlichkeit die Gaskonzentrationswerte neu berechnet werden und in einem EEPROM abgespeichert werden. Werden andererseits vorgegebene Schwellenwerte vom Überwachungssignal entweder über- oder unterschritten, gibt die Schaltung eine Störungsmeldung ab, die darauf hinweist, dass entweder durch eine undichte Membran keine Druckmodulierung in der Messzelle entstanden ist, die Empfindlichkeit des Mikrofons auf Null abgefallen und/oder das Heizelement defekt ist.

Die Explosionssicherheit der Überwachungsvorrichtung ist dadurch gewährleistet, dass der durch das Heizelement fliessende Strom und die von dem Heizelement und den Komponenten der Schaltung erreichten Höchsttemperaturen Sicherheitsvoraussetzungen erfüllen, wie zum Beispiel jene gemäss der Euronorm EN 50020:1994, die von der Physikalischen Technischen Bundesanstalt Braunschweig (PTB) überprüft werden. Am Beispiel des Drahtes als Heizelement ist dies durch geeignete Wahl des Materials und der Dimensionen des Drahtes realisiert.

Ausführungsformen der Erfindung sind anhand der folgenden Zeichnungen erläutert.

Figur 1 zeigt einen photoakustischen Gassensor im Querschnitt mit einer Vorrichtung zur Erwärmung der Luft in der Messzelle.

Figuren 2 a) und b) zeigen eine Ausführung eines elektrischen Heizelementes zur Erwärmung der Luft in der Messzelle und der Montage eines elektrisch heizbaren Drahtes als Heizelement.

Figur 3 zeigt einen schematischen Aufbau der Schaltung zum Betrieb der Überwachungsvorrichtung des Gassensors und Auswertung der Ausgangssignale des Mikrofons.

Figur 4 zeigt ein Beispiel eines zeitlichen Verlaufs einer Überwachung des Gassensors und Kalibrierung der Mikrofonempfindlichkeit.

Figur 5 zeigt die verschiedenen Bereiche, denen die Überwachungssignale zwecks ihrer Bewertung zugeordnet werden.

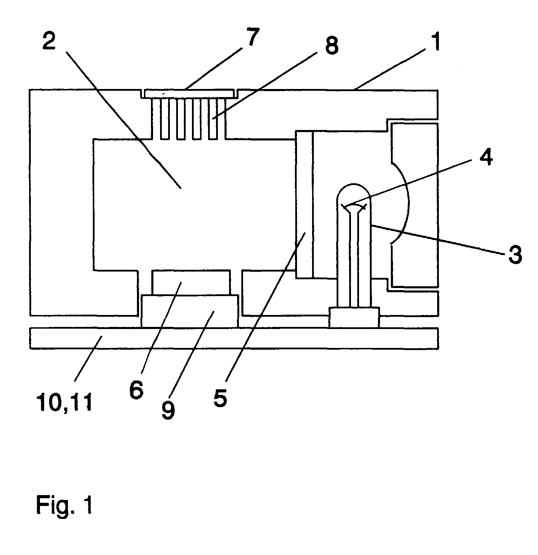

Figur 1 zeigt einen photoakustischen Gassensor 1 im Querschnitt mit einer Messzelle 2, einer Lampe 3 mit einem Glühwendel 4 als Lichtquelle und einem optischen Bandpassfilter 5, einem Mikrofon 6 und einer gaspermeablen Membran 7, die auf einem Lochgitter 8 liegt und mit Klebstoff mit der Messzellwand dicht verbunden ist. (Eine Photodiode zur Überwachung der Lichtintensität ist hier nicht eingezeichnet). Vom Glühwendel 4 gehen breitbandige Lichtpulse aus, die nach einer spektralen Filterung am Bandpassfilter 5 die Messzelle 2 ausstrahlen. Beispielsweise ist das optische Bandpassfilter 5 in einem schmalen Spektralbereich um die Wellenlänge von 4.26 µm durchlässig, das von CO₂-Gas absorbiert wird. Befindet sich CO₂-Gas in der Umgebung des Gassensors 1, dringt es durch die gaspermeable Membran 7 in die Messzelle 2 ein, wo es das Licht absorbiert und sich erwärmt. Durch die Erwärmung dehnt es sich aus und erzeugt eine Druckmodulierung, die vom Mikrofon 6 in ein elektrisches Signal umgewandelt wird. Zur Überwachung der Funktion der Membran 7 und des Mikrofons 6 weist der Gassensor 1 ein Heizelement 9 auf, das an einem beliebigen Ort im Innenraum der Messzelle 2 angeordnet ist. Vorzugsweise ist es in der Nähe der Leiterplatte 10 mit der Schaltung 11 zum Betrieb des Gassensors 1 und Heizelements 9 sowie zur Auswertung der Ausgangssignale des Mikrofons 6. Das Heizelement 9 besteht vorzugsweise aus einem dünnen Draht, wobei sich aber auch konventionelle und Surface-Mount-Widerstände sowie Heizfolien dafür eignen. Eine weitere Ausführung der Vorrichtung der Erwärmung der Luft ist die elektrische Erwärmung des Mikrofongehäuses. An das Heizelement 9 wird eine modulierte Spannung angelegt, wodurch es selbst und die Luft in der Messzelle 2 erwärmt werden und durch die Ausdehnung der Luft eine künstliche und von der Anwesenheit von zu detektierenden Gasen unabhängige Druckmodulierung erzeugt wird. Diese Druckmodulierung wird vom Mikrofon 6 in ein elektrisches Signal umgewandelt, das von der Schaltung 11 verstärkt und ausgewertet wird, worauf eine Meldung abgegeben wird, die angibt, ob das Mikrofon 6 und die Membran 7 funktionieren oder die Mikrofonempfindlichkeit im Vergleich zum Beginn der Einsatzzeit des Gassensors 1 sich verändert hat. Das Heizelement 9 und die Komponenten der Schaltung 11 sowie ihre Betriebsparameter erfüllen die Bestimmungen für einen explosionssicheren Betrieb gemäss des PTB. Diese Bestimmungen, zum Beispiel die der Temperaturklassen T6 und T4 der Euronorm EN 50020:1994, setzen die Maximaltemperatur von Komponenten bei 85°C bzw. 135°C fest. Um eine Zündfähigkeit im Falle eines Defekts des Heizelements auszuschliessen, muss auch der Strom und die Spannung begrenzt werden. Die Strombegrenzung für das Heizelement liegt hier bei 1 mA. Die Bestimmungen für die Temperaturklasse T6 werden von der Überwachungsvorrichtung des Gassensors eingehalten; die Höchsttemperatur des Heizelementes 9 beträgt weniger als 85°C, und mit dem begrenzten Stromfluss von 1 mA wird eine für die Überwachung genügende Erwärmung der Luft erzielt. Hierbei wird die höchste Betriebstemperatur des Gassensors 1 berücksichtigt: Beträgt diese 60 °C, darf sich das Heizelement 9 um nicht mehr als 25°C erwärmen. Es wird also ein Heizelement 9 mit entsprechendem Widerstand eingesetzt und bei Verwendung eines Drahtes sind dessen Durchmesser, Länge und Material auf diesen Widerstand abgestimmt. Das Material ist vorzugsweise eines, das chemisch stabil ist und dessen Widerstand sich als Funktion der Temperatur möglichst wenig verändert, sodass die vom Draht abgegebene Wärmeleistung über lange Zeit stabil und unabhängig von der Temperatur sind. Beispiele geeigneter Materialien sind Nikrothal und Konstantan. Wird stattdessen ein Material mit höherem Temperaturkoeffizienten des spezifischen Widerstands eingesetzt, wäre die Wahl der Parameter des Drahtes erschwert, da die am Heizelement angelegte Spannung entsprechend der Drahttemperatur reguliert werden müssten. Ein Beispiel eines Heizelementes, das den genannten Rahmenbedingungen genügt, ist ein Draht aus Nikrothal mit einem Durchmesser von 30 µm und einer Länge von 1 cm, dessen Widerstand 20 Ω beträgt. Fliesst ein Strom von 0.6 mA bei einer angelegten Spannung von 12 mV durch diesen Draht, erwärmt er sich nach theoretischer Berechnung um 2.5°C, während die gemessene Temperaturerhöhung des Drahtes ca. 1°C beträgt. Die Parameter und das Material des Drahtes können auch entsprechend gewählt werden, sodass nur die Bestimmungen der Temperaturklasse T4 erfüllt sind.

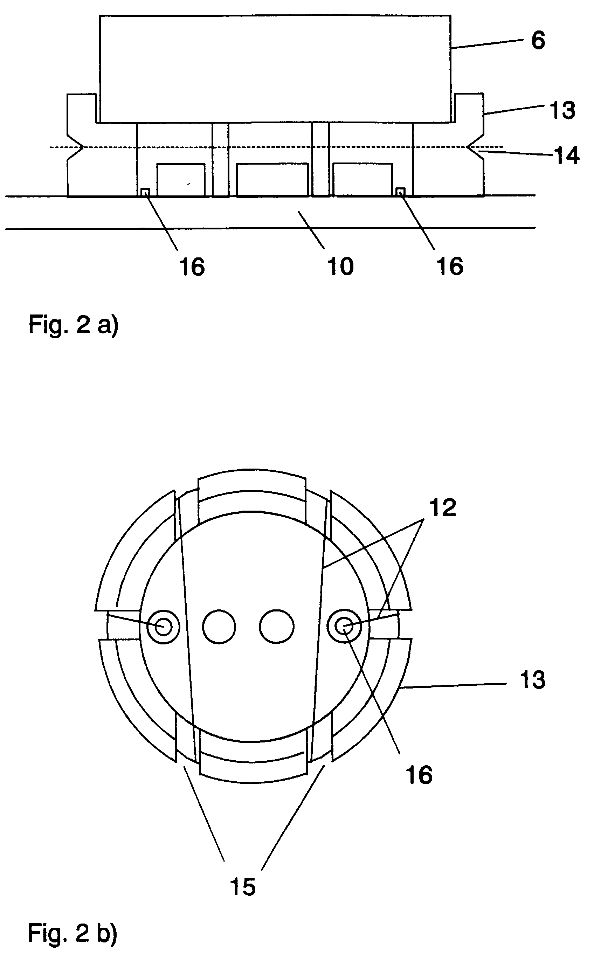

Figuren 2 a) und b) zeigen in einem Querschnitt bzw. einer Draufsicht ein Beispiel einer Montage eines Drahtes 12 als Heizelement 9. Der Draht 12 ist auf einem zylindrischen Träger 13 befestigt, der am Mikrofon 6 angefügt und mit Klebstoff an der Leiterplatte 10 befestigt ist. Um einen Luftraum zwischen dem Mikrofon 6 und dem Draht 12 zu gewähren ist das Mikrofon 6 auf einem Absatz befestigt. Dadurch dient der zylindrische Träger zugleich als Halterung für das Mikrofon 6. An der Aussenseite des zylindrischen Trägers 13 ist der Draht in einer Kerbe 14 geführt, sodass sich dieser auf der mit der gestrichelten Linie eingezeichneten Ebene verläuft und sich von ihr nicht verschiebt. Dies bezweckt, dass unter sowie über dem Draht 12 ein Luftraum besteht und er elektrisch isoliert ist, indem er mit der Wand der Messzelle 2 und dem Mikrofon nicht in Kontakt kommt. Der zylindrische Träger 13 besteht aus einem nicht leitenden Material, wie zum Beispiel Polycarbonat. Der Draht 12 ist gleich einem Mäander um mehrere Schlitze 15 am oberen Rand des zylindrischen Trägers 13 gewunden. Die Enden des Drahtes 12 sind durch Löcher in der Mitte des zylindrischen Trägers 13 geführt und mit Lötstellen 16 auf der Leiterplatte 10 verlötet.

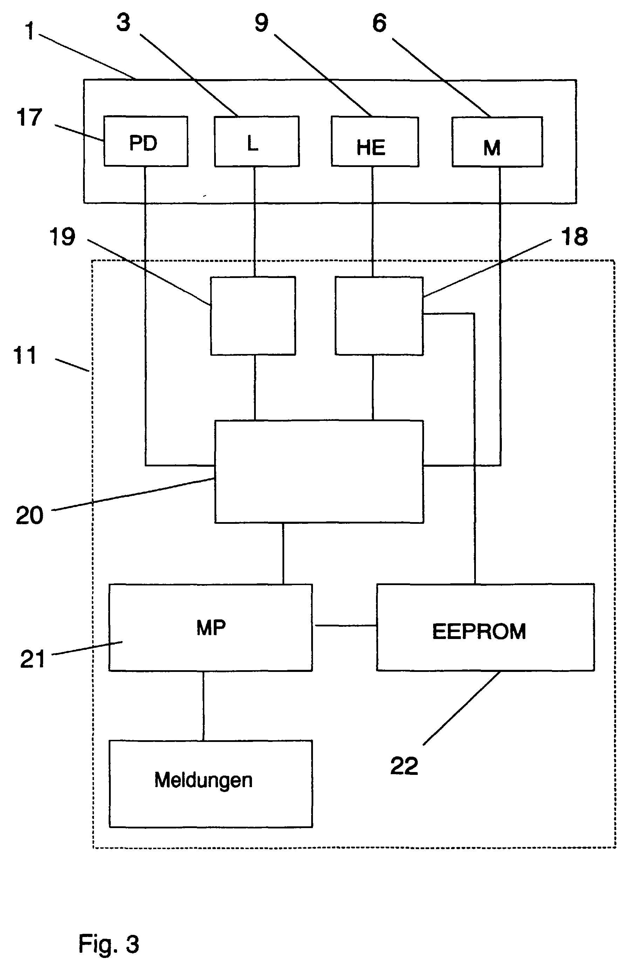

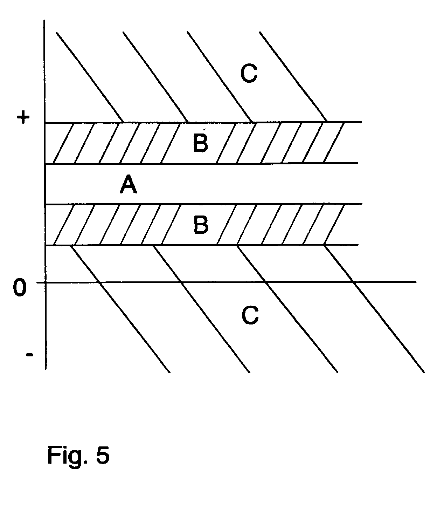

Figur 3 zeigt einen schematischen Aufbau des Gassensors 1 mit Überwachungsvorrichtung. Sie zeigt die elektrischen Komponenten des Gassensors 1, die Lampe L 3, das Mikrofon M 6, die Photodiode PD 17 und das Heizelement HE 9 sowie die Schaltung 11 zum Betrieb des Gassensors 1 und der Überwachungsvorrichtung. Die Schaltung 11 enthält eine erste Treiberschaltung 18 für das Heizelement 9 und eine zweite Treiberschaltung 19 für die Lampe L 3. Die vom Mikrofon M 6 aufgrund von empfangenen Druckmodulierungen erzeugten elektrischen Signale werden einer Auswerteschaltung 20 zugeführt, wo sie linear verstärkt, durch ein Hochpass- und Tiefpassfilter bereinigt und durch einen Gleichrichter synchron gleichgerichtet und geglättet werden. Die resultierenden DC-Signale werden an einen Mikroprozessor MP 21 weitergeleitet, der sie mit vorgegebenen Vergleichswerten vergleicht. Fallen die Grössen der Überwachungssignale in vorgegebene Kalibrationsbereiche (siehe hierzu auch Fig. 5), bedeutet dies, dass die Mikrofonempfindlichkeit sich verändert hat. In diesem Fall wird vom Mikroprozessor MP 21 die zeitliche Veränderung des Überwachungssignals in der Bewertung einbezogen. Bei einer langsamen Veränderung, wie zum Beispiel einer Veränderung über mehrere Tage, wird dies als Langzeitdrift bewertet, und es wird eine Kalibriening der Mikrofonempfindlichkeit durchgeführt, indem die im EEPROM 22 gespeicherten Werte zur Bestimmung der Konzentrationswerte oder Gaskonzentrationswerte entsprechend der Veränderung der Mikrofonempfindlichkeit nachgeführt werden. Dies geschieht, indem die prozentuale Veränderung der Überwachungssignale bestimmt wird und die Gaskonzentrationswerte entsprechend geändert werden. Mit dieser Nachführung der Mikrofonempfindlichkeit wird die Langzeitdrift des Mikrofons korrigiert. Bei einer schnellen Veränderung innerhalb der Kalibrationsbereiche sowie in dem Fall, dass die Überwachungssignale die Kalibrationsbereiche unter- oder überschreiten, wird vom Mikroprozessor eine Meldung abgegeben, wie zum Beispiel ein optisches oder akustisches Signal, das auf eine Störung am Mikrofon und/oder an der Membran hinweist.

Das EEPROM 22 enthält ausser den Gaskonzentrationswerten weitere Betriebsdaten des Gassensors wie Zähler, Temperaturen des Messgases, Helligkeitswerte der Lampe 3 und Phasenwerte für die optimale Verstärküng der Mikrofonsignale. Die Temperaturen des Messgases werden durch einen im Mikroprozessor 20 enthaltenen Temperaturfühler festgestellt und für die Neuberechnung der temperaturabhängigen Gaskonzentrationswerte durch den Mikroprozessor 21 verwendet. Die Helligkeitswerte der Lampe 3 werden von der Photodiode 17 und der Auswerteschaltung 20 dem Mikroprozessor 21 zugeführt und für die Regelung der Lichtintensität der Lampe 3 verwendet, indem die nötige Impulsdauer berechnet und der Treiberschaltung 19 für die Lampe 3 zugeführt wird. Die Phasenwerte sind die Phasenunterschiede zwischen Spannungssignal für das Heizelement 9 und dem Ausgangssignal des Mikrofons 6. Die Phasenwerte werden während der Herstellung des Gassensors 1 bestimmt, indem die Verstärkung des Ausgangssignals des Mikrofons 6 durch Eingabe der Phase optimiert wird. Die Phase, bei der das Mikrofonsignal ein Maximum erreicht, wird sodann im EEPROM 22 gespeichert.

Das EEPROM 22 ist ein serielles EEPROM mit einem Integrated Interface Circuit-Bus (IIC-Bus). Dank diesem IIC-Bus ist nebst der Clockleitung nur eine Datenleitung nötig. Die Clock des EEPROMs dient zugleich als Clock für das Heizelement 9, indem das Clocksignal der ersten Treiberschaltung 18 für das Heizelement 9 zugeführt wird.

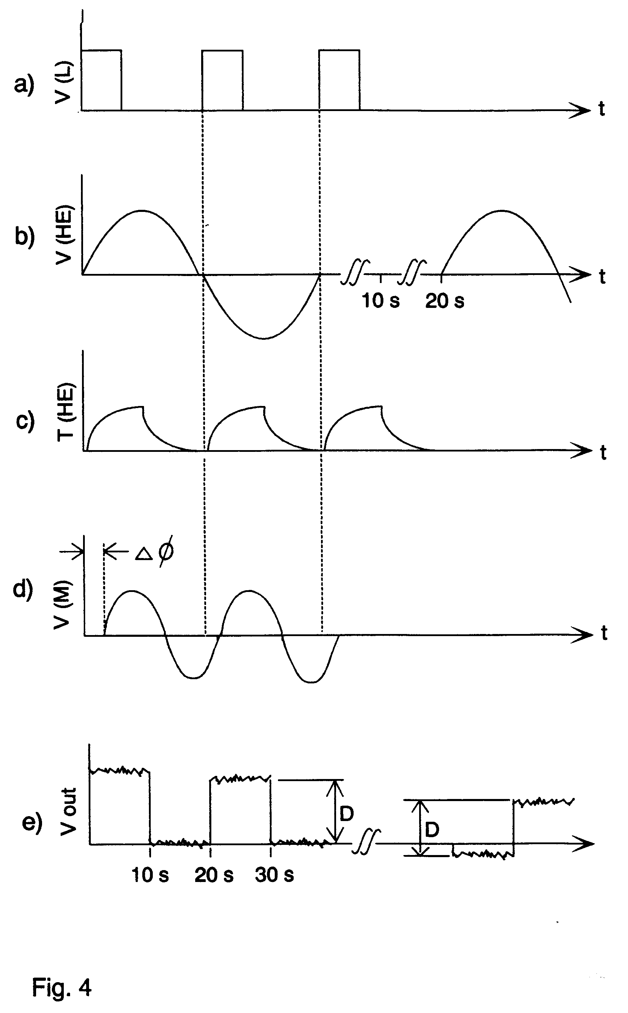

Figur 4 zeigt ein Beispiel eines zeitlichen Verlaufs einer Überwachung des Gassensors 1 als Funktion der Zeit t. Figur 4 a) zeigt die Spannungspulse V (L) für den Betrieb der Lampe 3. Beispielsweise wird sie bei 14 Hz und einem Arbeitszyklus von einem Drittel betrieben. Ein Heizelement zur Erwärmung der Messzelle 2 wird, wie die modulierte Spannung V (HE) in Figur 4 b) zeigen, bei 7 Hz betrieben, wobei die Leistungskurve die Taktfrequenz von 14 Hz hat. Eine Synchronisation der Lampe 3 und der Erwärmung des Heizelementes 9 erlaubt eine einfachere Auswertung der Überwachungssignale und Gassignale mit denselben elektrischen Komponenten. Die modulierte Spannung hat aus Gründen des elektrischen Übersprechens vorzugsweise eine Sinusfünktion, eine Dreiecks- oder Trapezfunktion oder eine Funktion mit beliebigen Flanken eignen sich ebenfalls. Figur 4 c) zeigt den ungefähren Temperaturverlauf T (HE) eines Nikrothaldrahts von 2.5 cm Länge und 30 µm im Durchmesser, durch den gemäss Figur 4 b) ein Strom von weniger als 1 mA fliesst. Figur 4 d) zeigt ein von der künstlichen Erwärmung der Messzelle 2 resultierendes Überwachungssignal V (M), das vom Mikrofon 6 erzeugt worden ist. Die Phasenverschiebung Δφ des erzeugten Signals bezüglich der Spannung zum Betrieb des Heizelements 9 ist die bei der Herstellung durch Optimierung des Mikrofonsignals festgestellte und im EEPROM 22 gespeicherte Phase.

Figur 4 e) zeigt das DC-Ausgangssignal Vout der Auswerteschaltung 20 der Überwachungsvorrichtung über längere Zeit. An diesem Betriebsbeispiel wird die Überwachungsvorrichtung bei einer Frequenz von 1/10 Hz ein- und ausgeschaltet, wodurch vermieden wird, dass die Überwachungsvorrichtung permanent in Betrieb ist. Das Überwachungssignal ist jeweils um eine Grössenordnung kleiner als das Signal, das von einer Gasdetektion herrührt. Es kann also mit Sicherheit von einem Gasalarmsignal unterschieden werden. Über eine gegebene Zeitdauer, zum Beispiel 30 Sekunden, wird der Mittelwert der Signaldifferenz D zwischen dem ein- und ausgeschalteten Zustand bestimmt. Dieser Mittelwert ist die massgebende Grösse des Überwachungssignals und wird vom Mikroprozessor 21 den Bereichen in Fig. 5 zugeordnet.

Fig. 5 zeigt drei verschiedene Bereiche A, B und C. Je nach dem Bereich, in welchen der Mittelwert fällt, wird das Überwachungssignal gemäss der nachfolgenden Logiktabelle interpretiert und eine Meldung abgegeben. Fällt der Mittelwert der Signaldifferenz D in den Bereich A, ist durch eine intakte Membran und bei voller Mikrofonempfindlichkeit der normale Signalgrösse erreicht worden, und es wird vom Mikroprozessor eine Meldung abgegeben, die darauf hinweist, dass die Membran und das Mikrofon korrekt funktionieren. Fällt der Mittelwert in einen der beiden Bereiche B und verändert sich nur langsam über längere Zeit, wird eine Neukalibrierung zur Nachführung der Mikrofonempfindlichkeit durchgeführt. Ist die zeitliche Veränderung dagegen schnell, liegt diese nicht einer Langzeitdrift sondern einem Defekt zugrunde, und es erfolgt eine Störungsmeldung. Fällt der Mittelwert in die Bereiche C, liegt die Mikrofonempfindlichkeit ausserhalb des nachführbaren Bereichs und es wird sowohl bei einer schnellen als auch langsamen zeitlichen Veränderung eine Störungsmeldung abgegeben.

| Mittelwert des Überwachungssignals | Zeitliche Veränderung des Mittelwerts des Überwachungssignals | | Meldung oder Aktion des Mikroprozessors MP |
|---|---|---|---|
| A | schnell | | korrekte Funktion |
| | | langsam | korrekte Funktion |
| B | langsam | | Neukalibrierung |
| | | schnell | Störung |
| C | schnell | | Störung |
| | | langsam | Störung |

## Patentansprüche

1. Photoakustischer Gassensor (1) für die Messung der Konzentrationen von Gasen mit einer Messzelle (2), einer Lichtquelle, einer Photodiode (17), einer gaspermeablen Membran (7), einem Mikrofon (6) und einer Schaltung zum Betrieb der Lichtquelle und zur Auswertung der Mikrofonsignale, dadurch gekennzeichnet, dass der photoakustische Gassensor (1) zur Überwachung der Funktionstüchtigkeit der gaspermeablen Membran (7) und des Mikrofons (6) und zur Durchführung einer Kalibrierung der Mikrofonempfindlichkeit eine Vorrichtung zur aktiven, modulierten Erwärmung der in der Messzelle (2) befindlichen Luft zwecks Erzeugung einer künstlichen, von der Anwesenheit von zu detektierenden Gasen in der Messzelle (2) unabhängigen Druckmodulierung aufweist sowie eine Schaltung (11) zum Betrieb der Vorrichtung für die Erzeugung der modulierten Erwärmung, zur Verarbeitung und Auswertung von aufgrund der künstlichen Druckmodulierung vom Mikrofon (6) erzeugten Überwachungssignalen zur Feststellung des Funktionszustands des Mikrofons (6) und der Membran (7) und zur Feststellung und Kalibrierung der Mikrofonempfindlichkeit.

2. Photoakustischer Gassensor (1) nach Patentanspruch 1, dadurch gekennzeichnet, dass die Schaltung (11) eine erste Treiberschaltung (18) zum Betrieb der Lichtquelle aufweist sowie eine zweite Treiberschaltung (19) zum Betrieb der Vorrichtung zur Erwärmung der in der Messzelle (2) befindlichen Luft, eine Verarbeitungsschaltung (20) für die Verstärkung und Filterung der vom Mikrofon (6) erzeugten Überwachungssignale und einen Mikroprozessor (21) zu ihrer Auswertung im Vergleich zu vorgegebenen Wertbereichen und zur Berechnung und Speicherung in einem EEPROM (22) von Gaskonzentrationswerten gemäss der festgestellten Mikrofonempfindlichkeit.

3. Photoakustischer Gassensor (1) nach Patentanspruch 2, dadurch gekennzeichnet, dass die Vorrichtung zur modulierten Erwärmung der in der Messzelle (2) befindlichen Luft ein elektrisches Heizelement (9) aufweist, das aus einem Draht (12), einem Widerstand, einer Heizfolie oder dem Mikrofongehäuse besteht.

4. Photoakustischer Gassensor (1) nach Patentanspruch 3, dadurch gekennzeichnet, dass der Draht (12) aus einem Material mit niederem Temperaturkoeffizienten des spezifischen Widerstands besteht.

5. Photoakustischer Gassensor (1) nach Patentanspruch 4, dadurch gekennzeichnet, dass der Draht (12) aus Nikrothal oder Konstantan besteht.

6. Photoakustischer Gassensor (1) nach Patentanspruch 5, dadurch gekennzeichnet, dass die Vorrichtung zur Überwachung explosionssicher betrieben wird, indem durch das Heizelement (9) ein Strom von maximal 1 mA fliesst und die vom Heizelement (9) und den Komponenten der Schaltung (11) erreichte Höchsttemperatur maximal 135°C beträgt.

7. Photoakustischer Gassensor (1) nach Patentanspruch 6, dadurch gekennzeichnet, dass der Draht (12) auf einem zylindrischen Träger (13) angeordnet ist, der dem Mikrofon (6) angefügt ist.

8. Photoakustischer Gassensor (1) nach Patentanspruch 7, dadurch gekennzeichnet, dass der zylindrische Träger (13) als Halterung für das Mikrofon (6) ausgebildet ist.

9. Photoakustischer Gassensor (1) nach den Patentansprüchen 7 oder 8, dadurch gekennzeichnet, dass der Draht (12) durch Schlitze (15) am oberen Rand des zylindrischen Trägers (13) und in einer Kerbe (14) an der Aussenseite des zylindrischen Trägers (13) geführt ist und sowohl unter als auch über dem Draht (12) ein Luftraum besteht.

10. Photoakustischer Gassensor (1) nach Patentanspruch 9, dadurch gekennzeichnet, dass das EEPROM (22) ein serielles EEPROM mit IIC-Bus ist, dessen Clocksignal zum Takten der ersten Treiberschaltung (18) zum Betrieb des Heizelementes (9) zugeführt ist.

11. Verfahren zur Bewertung von Überwachungssignalen eines photoakustischen Gassensors (1) nach den Patentansprüchen 1 bis 10, dadurch gekennzeichnet, dass die Grössen der Überwachungssignale vom Mikroprozessor (21) Bereichen zugeordnet werden und ihre zeitliche Veränderung bewertet wird, wobei bei einem Überwachungssignal in einem ersten positiven Bereich eine Meldung für korrekte Funktion der gaspermeablen Membran (7) und des Mikrofons (6) abgegeben wird, bei einem Überwachungssignal, das sich innerhalb eines zweiten, dem ersten benachbarten Bereichs aufgrund einer Langzeitdrift zeitlich langsam verändert, eine Kalibrierung der Mikrofonempfindlichkeit durchgeführt wird, indem entsprechend der Grösse des Überwachungssignals neue Gaskonzentrationswerte berechnet und im EEPROM (22) abgespeichert werden, und bei einem Überwachungssignal, das sich innerhalb dieses zweiten Bereichs zeitlich schnell verändert oder bei einem Überwachungssignal ausserhalb des ersten und des zweiten Bereichs eine Störungsmeldung abgegeben wird, die auf einen Defekt am Mikrofon (6) und/oder an der Membran (7) hinweist.
